# EUROPEAN PATENT SPECIFICATION

(11) **EP 2 652 062 B1**
(45) Date of publication and mention of the grant of the patent: **04.09.2019**
(21) Application number: 11848739.6
(22) Date of filing: 13.12.2011
(51) Int. Cl.: A61C 13/083, A61C 5/70, C09K 3/00, C03B 11/14

(54) **INDIRECT RESTORATION TECHNOLOGY**
INDIREKTE WIEDERHERSTELLUNGSTECHNOLOGIE
TECHNOLOGIE DE RESTAURATION INDIRECTE

(30) Priority: 08.12.2011 US 201113374041; 14.12.2010 US 459506 P
(43) Date of publication of application: 23.10.2013
(73) Proprietor: James R. Glidewell Dental Ceramics, Inc., Newport Beach, CA 92660 (US)
(72) Inventor: CASTILLO, Rodolfo, Boca Raton, FL 33433 (US); CARDEN, Robin, A., San Juan Capistrano, CA 92675 (US); FRIEBAUER, Wolfgang, Costa Mesa, CA 92626 (US)
(74) Representative: Manley, Nicholas Michael
(86) International application number: PCT/US2011/001979
(87) International publication number: WO 2012/082156

(56) References cited:
- EP-A1- 0 888 107
- US-A- 4 194 907
- US-A- 4 205 982
- US-A1- 2005 158 693
- US-A1- 2009 291 820
- US-A1- 2009 291 820
- US-A1- 2010 083 706

## Description

A dental restoration or dental filling is a dental restorative material used to restore the function, integrity and morphology of missing tooth structure. The structural loss typically results from caries or external trauma. It is also sometimes lost intentionally during tooth preparation to improve the aesthetics or the physical integrity of the intended restorative material. Dental restoration also refers to the replacement of missing tooth structure that is supported by dental implants.

Dental restorations can be divided into two broad types: direct restorations and indirect restorations. Direct restorations are done on the spot such as filling a tooth that has a cavity. Indirect restorations require a subsequent visit after initial measurements are taken. All dental restorations can be further classified by their location and size. A root canal filling is a restorative technique used to fill the space where the dental pulp normally resides.

The present invention concentrates on indirect restoration technology. The inventive technique relates to fabricating the restoration outside of the mouth using the dental impressions of the prepared tooth. Common indirect restorations include inlays and onlays, crowns, bridges, and veneers. Usually a dental technician fabricates the indirect restoration from records of the prepared tooth the dentist has provided. The finished restoration is usually bonded permanently with a dental cement. It is often done in two separate visits to the dentist. Common indirect restorations are done using gold or ceramics.

While the indirect restoration is being prepared, a provisory/temporary restoration is sometimes used to cover the prepared part of the tooth, and thereby help maintain the surrounding dental tissues.

When an individual needs a tooth restoration, a cosmetic dentist/technician may recommend that they receive a porcelain-fused-to-metal crown (also known as a PFM crown). A porcelain-fused-to-metal crown is constructed out of a metal core that is surrounded by a layer of baked porcelain fused to the metal.

Any number of reasons exist why a dentist may recommend a PFM crown. One reason is that the dentist may need to repair a previously filled tooth that has lost its dental filling. This tooth will require repair, and a crown is an excellent way to save the tooth, protect it from future decay, and restore its full functionality.

A tooth can also be damaged by grinding and clenching. A PFM crown is an excellent way of restoring its damaged and worn surface areas. But because of differences in the coefficient of thermal expansion (CTE), problems exist in using different materials, and as a result porcelain cracks and reveals the base alloy. By using a lithium silicate glass, one can obtain a 3X factor in MPa strength over porcelain and thereby provide a restoration that is likely to last many years longer than a typical PFM.

A tooth can be severely damaged by severe cracks and fractures. Many times these breaks are so severe that some dentists would assume the tooth is unsalvageable and recommend a tooth extraction. Instead, a porcelain-fused-to-metal crown can be placed over even a severely broken tooth and be made to function as if it were new.

Getting fitted with a porcelain-fused-to-metal crown always takes a patient more than one trip to the dentist because it involves a number of preparatory steps and the assistance of a special dental laboratory dedicated to the custom manufacture of various cosmetic dental restorations, including dental crowns. Most of the time, if all goes as planned; a patient will be fitted with a crown in two appointments.

The first appointment focuses on preparation. The dentist begins by numbing the area that surrounds the tooth. The dentist also places a rubber dam in the back of the mouth to protect the throat from dental debris, Next, he or she uses a dental handpiece to remove any decay away from the tooth and shapes it at the same time into a surface that will effectively wear the crown.

Once this process is completed, an impression of the teeth is made. Using this impression, the dentist will make a model of the teeth. This model is then sent to the dental lab. Before sending the patient home, the dentist completes the first visit by fitting the patient with a temporary crown that will protect the tooth during the interim between office visits.

Once the permanent crown is completed by the dental laboratory and sent to the dentist's office, the patient returns for a second visit. During this second visit, the temporary crown is removed, the prepped tooth is treated with an antiseptic and the new crown is cemented onto the prepped tooth, usually using a UV curable cement.

US 2009/291820 A1 discloses lithium silicate materials which can be easily processed by machining to dental products without undue wear of the tools and which subsequently can be converted into lithium silicate products showing high strength.

US 2005/158693 A1 discloses a dental alloy that comprises little or no amounts of noble metals. The alloys therein are designed to be a substitute for gold alloys in the fabrication of prosthetic dental appliances employing porcelain to metal bonds. The alloys are based on a combination of iron and chromium with a lesser inclusion of other elements to provide a high yield strength and to provide a durable impact resistant bond with dental porcelain.

EP 0 888 107 A1 discloses low-fusing temperature porcelain compositions, methods of use thereof on metal or ceramic substrates to form dental prostheses and kits therefor. Compositions of the invention have a fusing temperature of less than 800°C and a coefficient of thermal expansion compatible with a substrate of metal or ceramic. Each composition includes, in weight percent of the composition, from 40 to 65 percent by weight SiO₂, from 6 to 12 percent by weight Al₂O₃, from 6 to 12 percent by weight Na₂O, from 5.5 to 10.50 percent by weight K₂O, from 1 to 3 percent by weight Li₂O, from 0.8 to 2.5 percent by weight CaO, from 0.8 to 4.0 percent by weight B₂O₃ and from 0.1 to 0.8 percent by weight CeO₂.

US 4 194 907 A discloses a gold alloy for use in a dental restoration which does not cause discoloration and greening of dental porcelain after being cast and having a porcelain jacket fired thereon. The gold alloy also produces extremely clean castings. The alloy is 30-50% gold, 30-50% palladium, 5-30% silver, 0.01-5% of at least one element from silicon, boron, germanium and mixtures thereof and 0.01-1.0% of ruthenium. Other elements are included for strength.

### SUMMARY OF THE INVENTION

The present invention is defined by the appended independent claim. A preferred embodiment is defined in the appended dependent claim.

Patients can expect several benefits from a lithium silicate crown. For one thing, it will better cover and protect the tooth as compared to a typical PFM. This is the most important benefit gained from any type of dental crown, be it gold, porcelain, or PFM. Additional benefits to be expected are as follows:
1. Aesthetics, more tooth color like with translucency.
2. Strength: High flexural strength of MPa of 300 MPa compared to porcelain at 70-125 MPa.
3. Very stable CTE over multiple firings.
4. Pressing will be easier than multiple layers of porcelain.

The lithium silicate is made in an oval block form which is inserted, heated and then pressed over an alloy, which is made from a base impression. The preferred alloy will have a coefficient of thermal expansion (CTE) which is slightly greater than that of the lithium silicate material. The latter has a CTE in the range of 11.5 to 12.5 x 10⁻⁶/K. Therefore, a metal alloy having a CTE in the 12 to 13.5 x 10⁻⁶/K range is desired. The reason for this choice of respective CTE's is to permit the metal alloy to expand slightly more than the overlying lithium silicate so that there is a reduced likelihood of separation which could impact the integrity of the restoration. If the metal alloy expands less than the lithium silicate material, there is a high probability of separation during heating such as during fabrication of the restoration.

In the preferred embodiment, the metal alloy is a palladium/tin alloy wherein the ratio of respective metals is selected to provide a CTE in the range of 12 to 13.5 x 10⁻⁶/K.

### BRIEF DESCRIPTION OF THE DRAWINGS

The aforementioned objects and advantages of the present invention, as well as additional objects and advantages thereof, will be more fully understood herein after as a result of a detailed description of a preferred embodiment when taken in conjunction with the following drawings in which:
FIGs. 1A and 1B are cross-sectional views of respective dental crowns comprising the combination of materials of the invention hereof;
FIG. 2 is a cross-sectional view of a more complex dental restoration consisting of a bridge formed by the materials of the invention; and
FIG. 3 is a graph showing the percentage linear change vs. temperature for the lithium silicate glass ceramic and the Pd-Sn alloy of a preferred embodiment.

### DETAILED DESCRIPTION OF A PREFERRED EMBODIMENT OF THE INVENTION

The present invention may be best understood by referring to the accompanying drawings which show a preferred embodiment of the restorations made with lithium silicate on a metal alloy substrate. The lithium silicate, when pressed onto a metal alloy substrate, may be deemed to be a substitute material for porcelain fused to metal. One significant advantage derived from the use of lithium silicate instead of porcelain is the strength of the material. Lithium silicate has a strength in MPa which is approximately three times that of dental porcelain. The flexural strength of porcelain is in the range of 70 to 125 MPa. The flexural strength of lithium silicate glass ceramic is in the range of 300 to 380 MPa.

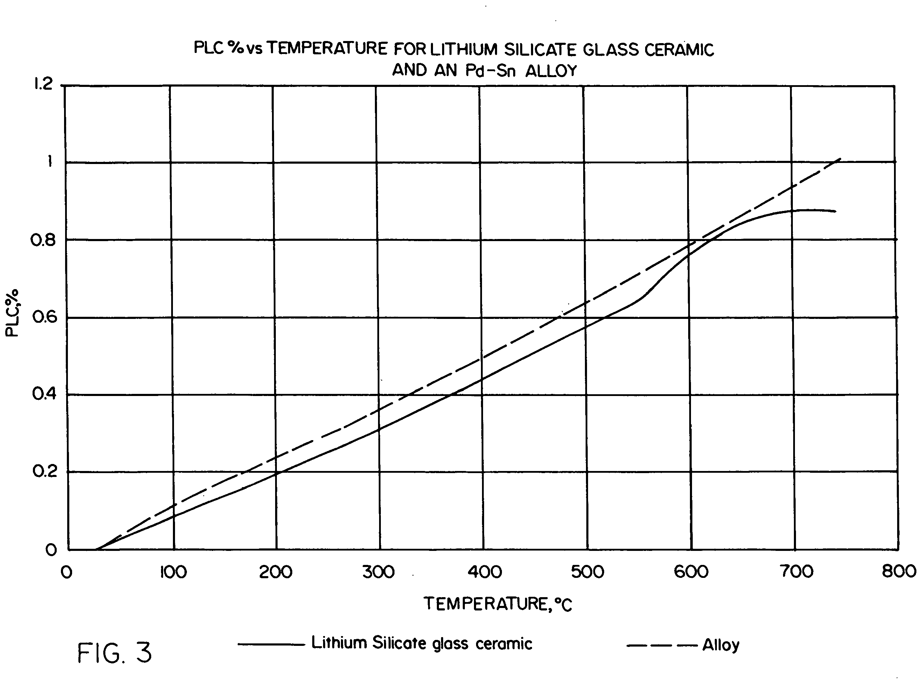

In one preferred embodiment, the lithium silicate is heated and pressed onto a metal alloy substrate made primarily of palladium and tin. This alloy has a coefficient of thermal expansion in the desired range of 12 to 13.5 x 10⁻⁶/K. This CTE is slightly higher than the CTE of the lithium silicate which is about 11.5 to 12.5 x 10⁻⁶/K. Having the CTE of the metal alloy substrate slightly higher than the CTE of the lithium silicate, permits the restoration to undergo increases in temperature with relatively little risk of separation because of over expansion of the lithium silicate glass relative to the metal substrate. There may be other suitable metal alloy formulations which would be compatible with the lithium silicate CTE of 11.5 to 12.5 x 10⁻⁶/K, and which would thus have a CTE preferably in the range of 12 to 13.5 x 10⁻⁶/K. FIG. 3 shows graphically the relative percentage linear change versus temperature for the selected palladium tin alloy and the lithium silicate glass ceramic in the preferred embodiment.

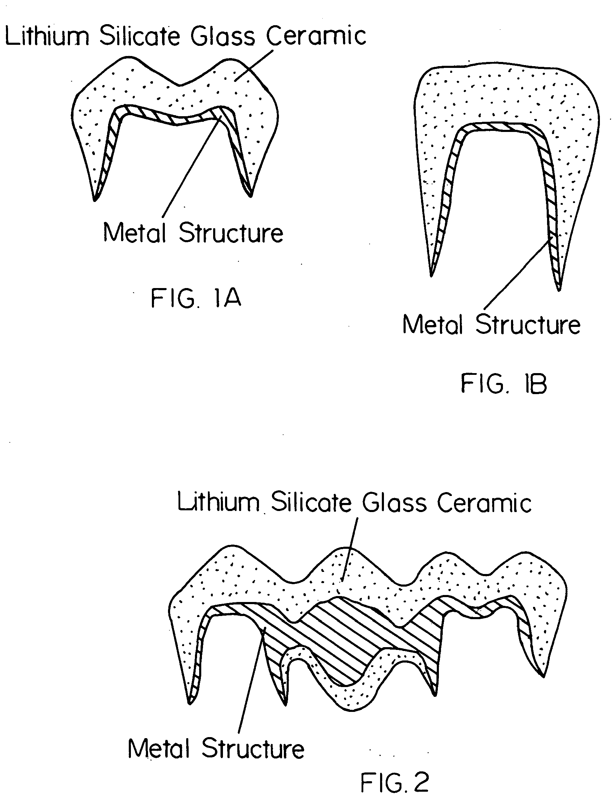

The preferred fabrication process comprises the steps of forming a block of the lithium silicate glass of selected color and texture and preparing the metal alloy substrate for geometric compatibility with an impression or digital scan of the tooth or teeth to be replaced or covered. Then the glass is inserted, heated and pressed over the alloy substrate to form the restoration such as depicted by way of example in FIGs. 1A, 1B and 2. The resulting restoration will have a more accurate tooth color and superior strength as compared to typical PFM restorations. Moreover, it will be more stable at elevated temperatures and easier to press onto the substrate, thus reducing the complexity of fabrication.

Thus it will be understood that the present invention comprises an indirect dental restoration formed of lithium silicate translucent glass ceramic heated and pressed onto a metal alloy substrate. In the preferred embodiment, the metal alloy has a slightly higher coefficient of thermal expansion than the lithium silicate glass ceramic. In one such preferred embodiment, the metal alloy substrate is formed from a palladium tin alloy wherein the relative constituents are selected to provide a CTE of 12 to 13.5 x 10⁻⁶/K as compared to the lithium silicate CTE of 11.5 to 12.5 x 10⁻⁶/K.

## Claims

1. A dental restoration comprising:
a lithium silicate glass ceramic heated and pressed onto a metal alloy substrate, the metal alloy substrate being shaped to conform to a base impression or scan of the relevant portion of the mouth, **characterised in that** the lithium silicate glass ceramic has a flexural strength of between 300 to 380 MPa and is shaped to replicate the dental structure being restored, and
the coefficient of thermal expansion of the metal alloy is in the range of 12 to 13.5 x 10⁻⁶/K, and the coefficient of thermal expansion of the lithium silicate glass ceramic is in the range of 11.5 to 12.5 x 10⁻⁶/K, wherein the coefficient of thermal expansion of the metal alloy is selected to be slightly greater than the coefficient of thermal expansion of the lithium silicate glass ceramic.

2. The dental restoration of claim 1 wherein the metal alloy comprises palladium and tin.

## Patentansprüche

1. Zahnrestauration, die Folgendes umfasst:
eine Lithiumsilicat-Glaskeramik, die erhitzt und auf ein Metalllegierungssubstrat gepresst wird, wobei das Metalllegierungssubstrat geformt wird, um mit einem Vorabdruck oder Scan des relevanten Teils des Munds übereinzustimmen, **dadurch gekennzeichnet, dass** die Lithiumsilicat-Glaskeramik eine Biegefestigkeit von zwischen 300 bis 380 MPa aufweist und geformt ist, um die Zahnstruktur, die restauriert wird, nachzubilden, und
der Wärmeausdehnungskoeffizient der Metalllegierung in dem Bereich von 12 bis 13,5 x 10⁻⁶/K liegt und der Wärmeausdehnungskoeffizient der Lithiumsilicat-Glaskeramik in dem Bereich von 11,5 bis 12,5 x 10⁻⁶/K liegt, wobei der Wärmeausdehnungskoeffizient der Metalllegierung ausgewählt wird, dass er etwas größer ist als der Wärmeausdehnungskoeffizient der Lithiumsilicat-Glaskeramik.

2. Zahnrestauration nach Anspruch 1, wobei die Metalllegierung Palladium und Zinn umfasst.

## Revendications

1. Restauration dentaire comprenant :
une vitrocéramique de silicate de lithium chauffée et pressée sur un substrat en alliage métallique, le substrat en alliage métallique étant façonné pour se conformer à une impression ou une numérisation de base de la partie d'intérêt de la bouche, **caractérisée en ce que** la vitrocéramique de silicate de lithium présente une résistance à la flexion comprise entre 300 à 380 MPa et est façonnée pour reproduire la structure dentaire restaurée, et
le coefficient de dilatation thermique de l'alliage métallique est dans la plage de 12 à 13,5 x 10⁻⁶/K, et le coefficient de dilatation thermique de la vitrocéramique de silicate de lithium est dans la plage de 11,5 à 12,5 x 10⁻⁶/K, le coefficient de dilatation thermique de l'alliage métallique étant choisi pour être légèrement supérieur au coefficient de dilatation thermique de la vitrocéramique de silicate de lithium.

2. Restauration dentaire de la revendication 1, dans laquelle l'alliage métallique comprend du palladium et de l'étain.
